# EUROPEAN PATENT SPECIFICATION

(11) **EP 3 389 365 B1**
(45) Date of publication and mention of the grant of the patent: **21.10.2020**
(21) Application number: 16815983.8
(22) Date of filing: 24.11.2016
(51) Int. Cl.: A01J 5/017

(54) **MILKING DEVICE**
MELKVORRICHTUNG
DISPOSITIF DE TRAITE

(30) Priority: 16.12.2015 NL 2015969
(43) Date of publication of application: 24.10.2018
(73) Proprietor: Lely Patent N.V., 3147 PB Maassluis (NL)
(72) Inventor: VAN DEN BERG, Karel, 3147 PB Maassluis (NL); VAN ADRICHEM, Maarten Johannes Jacobus, 3147 PB Maassluis (NL); VAN ADRICHEM, Paulus Jacobus Maria, 3147 PB Maassluis (NL)
(74) Representative: Octrooibureau Van der Lely N.V.
(86) International application number: PCT/NL2016/050824
(87) International publication number: WO 2017/105222

(56) References cited:
- EP-A1- 0 191 517
- EP-A1- 0 258 938
- EP-A1- 0 630 561
- EP-A1- 2 582 227
- WO-A1-2014/204395
- US-A1- 2012 272 902
- US-A1- 2015 264 885

## Description

The invention relates to a milking device for milking a dairy animal, more particularly a cow, and comprising a mounting with four detachable milking cups fitted thereto, a robot arm for displacing the mounting from a rest position in the direction of an udder of the dairy animal, and a control system for controlling the robot arm, wherein the four milking cups are each connected with a respective milk line connection to a respective milk line for the removal of milk milked with the milking cup and are connected with a respective pulsation line connection to a respective pulsation line.

Such milking robots are known in the prior art and have already been introduced onto the market, such as the Lely Astronaut®. The known milking robots have the drawback that the mounting with the milking cups fitted thereto, and the milk lines and pulsation lines, occupy a relatively large amount of space, which is undesirable in case of maneuvering under a dairy animal.

WO2014204395 discloses a gripping device for a robotic manipulation device for milking cows. The gripping device comprising for each milkingcup to be gripped a holding member for releasably hold a milking cup. The milking cups are part of a cluster which comprises in a conventional manner a claw connected via short milk tubes and short pulse tubes to the respective milkingcups. In the position under a cow, two milking cups are attached at one side and two milking cups are attached at the other side of the gripping device while the claw is hanging on the mainly vertically orientated short milk tubes.

The object of the present invention is to provide a milking device of said sort which is more compact and which requires less space in case of maneuvering under a dairy animal. More particularly, the invention aims to provide a milking device which is better capable of milking a dairy animal through between the hind legs.

The invention achieves this object with a milking device according to claim 1, in particular a milking device for milking a dairy animal, more particularly a cow, and comprising a mounting having four milking cups detachably fitted thereto, a robot arm for displacing the mounting from a rest position in the direction of an udder of the dairy animal, and a control system for controlling the robot arm, wherein the four milking cups are each connected with a respective milk line connection to a respective milk line for the removal of milk milked with the milking cup and are connected with a respective pulsation line connection to a respective pulsation line, wherein, once the four milking cups are fitted to the mounting, a first pair of the milk line connections and/or of the pulsation line connections extend substantially parallel to each other in a first direction, and another pair of the milk line connections and/or of the pulsation line connections extend substantially parallel to each other in a second direction, which first and second directions are substantially parallel to a vertical plane, and wherein a vertical projection of the first direction onto a horizontal plane and a vertical projection of the second direction onto a horizontal plane are oppositely directed.

In the milking device according to the present invention, the milk line connections extend, for example, in pairs which run mutually in opposite directions, but within each pair substantially in parallel. In other words, there is a pair of milk line connections which run substantially parallel to each other in a first direction, and a second pair of milk line connections which run substantially parallel to each other in a second direction, wherein the projections of the two directions onto especially the surface of the floor, i.e. the horizontal plane, are mutually opposed. This makes it possible to place the milking cups closer together, because the milk lines and/or pulsation lines are less in the way of one another, especially in the successive connection of the milking cups. Thus, above all the width of the arm with the milking cups can become smaller, so that the robot arm can better move the mounting through between the hind legs, with less chance of collisions.

A same consideration and design as described above for the milk line connections can also apply to the pulsation line connections. Since, furthermore, the pulsation lines are often integrated with the milk lines to form a multichannel line, and this can also apply to the respective connections to the milking cup, which are then integrated to form a component having two openings, a same consideration and design will apply to milking devices in which, for each milking cup, the milk line or milk line connection and the pulsation line or pulsation line connection are integrated to form a combination line.

In the present invention, the milking cups are detachably fitted to the mounting and are at the same time automatically retractable, with the aid of a retraction device. Such a retraction device can comprise, for example, a cord or chain or the like, as well as a tensioning device for this same, such as a roll-up device. The robot arm and the control system for controlling the robot arm are in particular configured to automatically fit the milking cups onto the teats of a dairy animal. To this end, the milking device can contain other relevant components, such as a teat recognition device. These details fall outside the scope of the present invention, however, and are known per se in the prior art.

By "substantially parallel to each other" and "substantially parallel" is herein meant that the relevant directions, such as of the components or axes, diverge by less than 15°, preferably less than 10°.

Particular embodiments of the invention are described in the dependent claims, as well as in the now following description.

In some embodiments, the first and the second direction are substantially opposed. Thus the height of the mounting at the height of the line connections can be kept relatively small. More particularly, the first and the second direction are substantially horizontal. By this is meant that the first and the second direction are substantially parallel to the mounting when the milking cups are fitted to the mounting. Thus optimal freedom is provided for moving the milking cups during connection to the teats. Nevertheless, the first and second direction could also each point (somewhat) upward or each point somewhat downward, so that they mutually form an angle less than 180°.

In some embodiments, the milk lines and/or the pulsation lines of the first pair extend in an arc and reach out, in the direction of an end facing away from their milk line and pulsation line connection respectively, substantially parallel with the second pair. Thus the milk lines and/or the pulsation lines run first in an arc, so as subsequently to converge with the other milk and/or pulsation lines. With such an arc, a sufficient freedom of movement is provided during the connection and the milk can especially be led off without sharp bends. Once again it is the case that the milk line and pulsation line of a milking cup, and hence their respective arcs, can be integrated in a multichannel line.

In particular, the arc extends in a substantially vertical plane. Thus, a suitable width of the mounting with the milking cups is provided, so that suitable maneuvering, especially through between the hind legs, can be carried out.

In particular, the milking device comprises a milking place, more particularly a milking box, for receiving and milking the dairy animal in an intended position, wherein the robot arm is positioned with respect to the milking place and designed to bring the mounting with the milking cups through between the hind legs of the dairy animal toward the udder. In such an embodiment, also referred to as a rear-milking milking robot, the small width of the mounting with the milking cups is optimally emphasized.

In particular embodiments, the milking device comprises a plurality of mutually parallel milking places, in particular milking boxes, wherein the robot arm is displaceable along at least two of the plurality of milking places, for the purpose of the milking in these at least two milking places. Thus the robot arm can be used at more than one milking place. To this end, the robot arm can be couplable with a mounting which belongs to the milking place. Each milking place then has a mounting with milking cups. If the milking cups are connected to a dairy animal in a first milking place, the robot arm can decouple from the mounting and shift to another of the milking places, so as there to couple with a mounting and connect up the milking cups. It can here be a question of milking places which are each milking boxes, so that the milking device relates to a specific milking shed. However, it can also be a system in which the milking places are feeding or drinking sites, in which the robot arm is not coupled to a particular place. For example, this can happen in the case of a feed fence and or drinking trough.

In some embodiments, the milking device comprises a teat recognition device and the control system is programmed and configured to make the robot arm, with the aid of the teat recognition device, automatically fit the milking cups onto teats of the dairy animal. Thus a robot milking device having the advantages already described above is provided. It is noted, however, that the milking device can also relate to a conventional device in which the robot arm brings the mounting only to under the dairy animal, whereafter a milker fits the milking cups manually onto the teats. An advantage with this is that the milker does not have to bear the entire weight of the milking cups and the mounting, but only a single milking cup at a time.

In particular embodiments, the robot arm and the mounting are couplable, in particular fixedly coupled, via a hinge having a substantially vertical central axis, wherein the control system is configured to make the robot arm rotate the mounting about the central axis. Thus the mounting can move, in particular rotate, with respect to the robot arm. This offers the advantage that the robot arm with the mounting, which together occupy little space, above all in the transverse direction, can easily be brought through between the hind legs to under the dairy animal, whereafter the control system, if so desired, can further position the mounting for the purpose of, for example, connection or the like. It is in fact often the case that, when a dairy animal assumes another position, the udder shifts with respect to especially the hind legs, such as in leaning posture or the like. It is then not necessary to displace the robot arm, but only to rotate the mounting. Thus there is still little chance of unwanted contact between the robot arm and the hind legs, while the mounting can nevertheless be correctly positioned.

In some embodiments, the mounting has two parallel side faces, as well as one or more front faces at an end thereof, and the milking cups of one of the two pairs of milking cups are each located, if fitted on the mounting, on one of the side faces, and the milking cups of the other pair of milking cups are each located on the front face or on one of the front faces. Thus the mounting, with the milking cups thereon, can be more compactly designed. Especially where the mounting is coupled with a robot arm via a hinge, as stated above, the mounting will be less in the way when the milking cups are fitted onto the rear teats. This applies less in the case of the front teats, which are almost always placed further apart. It is therefore advantageous if the two milking cups for the rear teats are placed on the front face or on two partial front faces of the mounting, which, after all, will then normally point away from the front side of the dairy animal toward the rear. The end of the mounting does not then have to run through between the milking cups for the rear teats, but can end earlier, i.e. the particular milking cups can be placed on the front face(s), so that these milking cups, if necessary, can be placed closer together.

In particular, the robot arm comprises a telescopic arm, a tracked cable duct or guide chain, or a parallelogram construction which, in particular, is pivotable about a horizontal axis. A telescopic robot arm and a tracked cable duct or guide chain have the advantage that these can be retracted into a particularly compact rest position. A parallelogram construction has a very simple and reliable structure, wherein, if this is pivotable about its horizontal axis, it can be brought into a vertical position in which it likewise occupies very little space, that is to say a very small footprint.

In some embodiments, at least one supplementary teat cup, which extends substantially in said vertical plane, is further fitted, in particular detachably, to the mounting. A supplementary teat cup of this type can be used, for example, to clean and/or stimulate and/or pre-milk a teat, or else to treat it after the milking. If the supplementary teat cup is likewise fitted to the mounting, such an action can be carried out very quickly before or after the milking, with in this case a good separation of the milked milk and the fluids to be used in the supplementary teat cup, or removed dirt. In particular, the at least one supplementary teat cup therefore comprises a teat-cleaning cup, a pre-milking cup or a teat-treating cup.

The present invention will be explained in greater detail below on the basis of a few exemplary embodiments, as well as with the aid of the drawing, in which:
figure 1 shows schematically a top view of a milking device according to the invention,
figure 2 shows a schematic top view of a part of the milking device,
figure 3 shows a schematic side view of the part of figure 2,
figure 4 shows an alternative of a part of the milking device according to the invention,
figures 5a and 5b show a schematic side and top view, respectively, of an alternative of a part of the milking device,
figure 6 shows a schematic top view of a further alternative of a part of the milking device, and
figure 7 shows a schematic view in perspective of another embodiment of the milking device according to the invention.

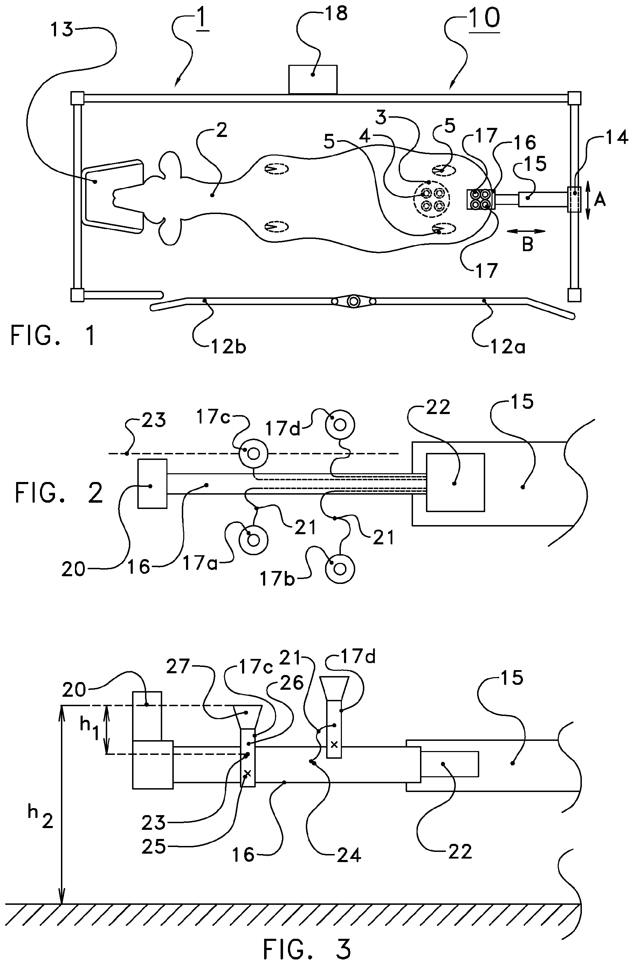

Figure 1 shows schematically a top view of a milking device according to the invention. The milking device is indicated in general terms with the reference numeral 1 and serves to milk a dairy animal 2, having an udder 3 with teats 4 and hind legs 5. The milking device 1 further comprises a milking box 10 having a frame 11 and gateways 12a, 12b and a feed trough 13.

To the frame 11 is fitted a displaceable trolley 14 with a robot arm 15 thereon, which latter bears a mounting 16 with teat cups 17. A control system of the milking device is indicated with 18.

The shown milking device 1 is a milking box with entrances and exits on one side, a so-called K-flow. Alternatively, access can also be provided on the rear side of the milking box 10 in a so-called I-flow, etc. In the shown embodiment, the robot arm 15 is suspended from a trolley 14, which is displaceable in the direction of the double arrow A along an arm of the frame 11. The robot arm 15 is telescopically movable in the direction of the double arrow B and can thereby bring the mounting 16, bearing the milking cups 17 in rest position, through between the hind legs 5 of the dairy animal 2 to the udder 4. All this happens under the control of the control system 18. This control system 18 is further configured to fit the robot arm 15 the milking cups 17 with the aid of the robot arm 15 onto the teats 4.

Here it is further noted that in this case, as in most cases, the longitudinal direction of the dairy animal 2 coincides with a longitudinal direction of the robot arm 15 and of the mounting 16. This runs parallel to the direction of the double arrow B and stands perpendicular to a connecting line between the hind legs 5. The distance between the hind legs 5 is often relatively small, whereby it is of importance that the mounting 16 with the milking cups 17 is designed correspondingly narrow.

Figure 2 shows schematically a side view of a part of a milking device according to the invention. What is shown is a part of a robot arm 15 having a mounting 16, with 4 milking cups 17a, b, c, d thereon. Reference numeral 20 represents in general terms a teat recognition device such as a camera, while cords which with a retraction or tensioning device 22 withdraw the milking cups on the mounting 16 into a respective rest position are indicated with 21. A (vertical) plane in which the milking cups lie in their respective rest position is indicated with 23.

In figure 2, the milking cup 17c is still in a rest position, while the milking cups 17a, b, d are detached from the mounting 16 and are connected to the rest of the milking device only by means of their respective cord 21, as well as their milk line (not shown here) (with separate or integrated pulsation line). The milking cups 17a and 17b form a first pair of milking cups, and the milking cups 17c and 17d form a second pair of milking cups. Both pairs of milking cups have respective rest positions which each lie in a plane that runs parallel with a longitudinal direction of the mounting 16. For the pair of milking cups, this is the plane 23. Thus the width of the mounting 16 with the milking cups 17 in the rest position is minimal.

After the milking with a milking cup 17, the particular milking cup can be withdrawn on the mounting 16 into a respective rest position, by tightening of the cord 21 by means of the retraction device 22. The cords 21 are in this case led through the mounting 16, which is here designed as a hollow plate, that is to say a flat box. Moreover, the cords 21 can also be designed as chains, bands etc., and these cords or the like, which can also to be generally referred to as "retraction means", can also be led over the mounting 16.

Figure 3 shows a schematic side view of the part according to Figure 2. In this, as in the drawing as a whole, similar components are indicated with the same reference numerals. In very schematic representation is shown how the milking cup 17c is in a rest position, while the milking cup 17d is detached from the mounting 16. A cord fastening point of the cord 21 on the respective milking cup 17 is here indicated with 23, while an opening in the mounting 16 where the cord passes out is indicated with 24. Finally, a center of gravity of the milking cup 17 is indicated with 25.

The milking cup 17c is in its rest position on the mounting 16. Thus, the fastening point 23 of the cord (not visible here) will find itself closest to, or even be pressed against, the accompanying opening in the mounting 16. The milking cup 17d, on the other hand, is free from the mounting and is situated higher, such as, for example, connected to a teat (not shown here).

The respective fastening points 23 are advantageously located above the center of gravity 25 of the particular milking cup. Upon tightening of the cord 21, this milking cup will thus be directed with the top side, that is to say the teat opening, upward, and cannot touch the ground. In order to further prevent the chance of contamination by touching of the floor, it is advantageous if the free length of the cord 21 is maximized. It can be seen that this maximized free path length fpl should satisfy: fpl = H₂ - 2x H₁. In this, H₂ is the minimum height above the floor at which the top side of the teat cup 17c is in the rest position, taking into account the range of movement of the robot arm 15 + mounting 16. H₁ is the height (or distance) below the top side of the milking cup 17 at which the cord fastening point 23 is placed. If the milking cup is free with a maximum free path length of the cord 21 between the respective opening and the milking cup 17, and if the milking cup 17, furthermore, is tilted, whereby the top side of the milking cup can hang with the teat opening maximally downward, under the abovementioned preconditions the top side of the milking cup, that is to say the teat opening, will still not touch the ground.

Moreover, it is here noted that the cord fastening point 23 advantageously lies as far as possible above the center of gravity 25. In a teat cup 17 comprising a cup wall 26 and a teat liner 27, this corresponds to making the distance between the cord fastening point 23 on the cup wall 26 and the teat liner 27 as small as possible, preferably no greater than 5 cm, more preferably no greater than 2 cm.

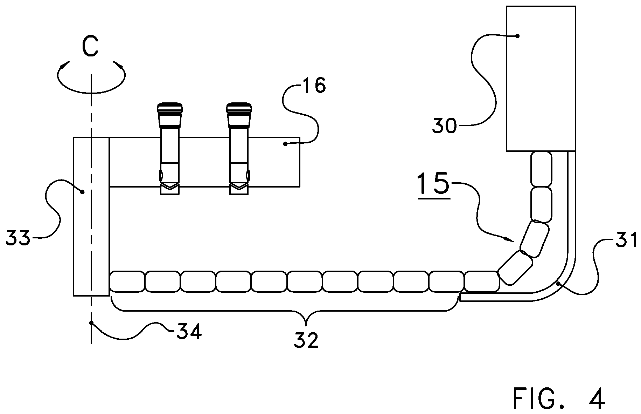

In figure 4, another embodiment of a part of the milking device is shown schematically in side view. Here, the generally indicated robot arm 15 comprises a fixed arm part 30, a guide 31 for a tracked cable duct 32, and a hinge 33 having a rotational axis 34.

The shown robot arm construction here comprises a tracked cable duct 32, which can bend up only one side. It is hereby possible to have the tracked cable duct 32 make a bend with the aid of the guide 31, so as to make it afterward extend in the horizontal direction. Upon retraction of the tracked cable duct 32, this can be rolled up or stored, for example, in the fixed arm part 30, in which an actuator (not shown here) for displacement of the tracked cable duct 32 can also, for example, be found.

To the tracked cable duct 32 is here bound, by means of a hinge 33, the mounting 16 with the milking cups. With the aid of the hinge 33, the mounting 16 is rotatable with respect to the tracked cable duct 32 along a rotational axis 34 in the direction of the double arrow C, thus the working range for connection of the milking cups is enlarged without the robot arm 15 having to be displaced to an unnecessary extent. Moreover, with the aid of the tracked cable duct 32, the mounting 16 can be displaced in the horizontal direction, especially through between the hind legs of the dairy animal, without the robot arm 15, in a retracted state, occupying a great deal of space. For the rotation of the mounting, the robot arm contains an actuator (not shown here), which is known per se in the prior art.

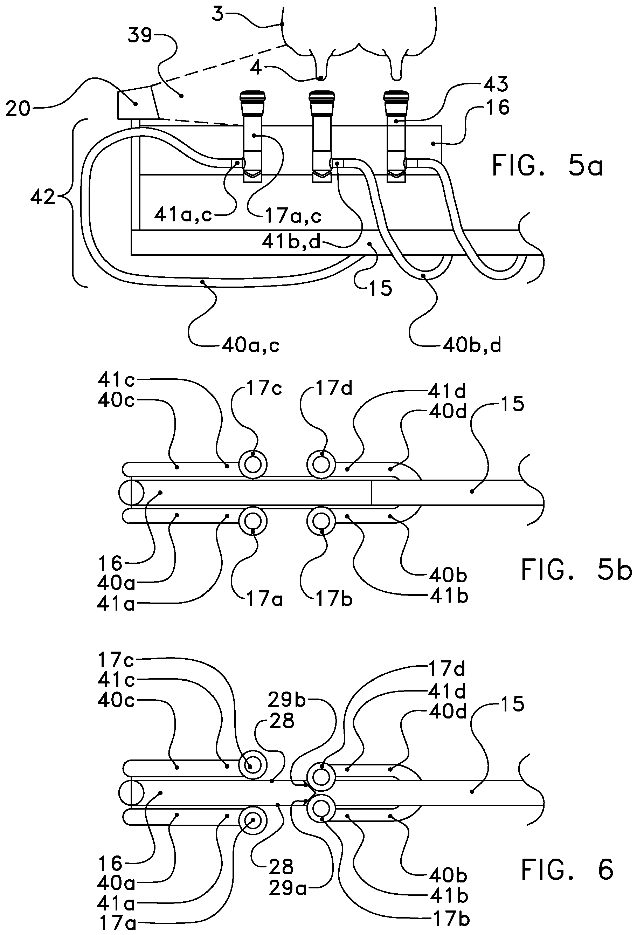

Figures 5a and 5b show schematically a side view and top view, respectively, of a variant of the part of the milking device according to the invention.

In this, the camera or teat recognition device 20 has an image field 39 for connection of the teat cups 17 to teats 4 of the udder 3. Milk lines, which comprise a milk line connection 41a, b, c, d and possibly an arc 42, are respectively indicated with 40a, b, c, d. A supplementary teat cup is indicated with 43.

The teat recognition device 20 is here schematically indicated as a camera having an image field 39 in which teats 4, as well as the top side of teat cups 17, are present. By means of image recognition, the control system can then control the robot arm to place the teat cups on the teats 4. Details of such cameras or other systems, such as laser or ultrasound scanners, fall outside the scope of this invention.

The milking cups 17 each have a milk line 40, which, for the sake of clarity, is not shown in the other figures and, as not uncommonly, can be integrated with respective pulsation lines. In figure 5a, it can be seen, however, that the milk line 40a, c advantageously extends forward from the respectively foremost milking cup 17a, 17c of each pair of milking cups, at least at the height of the respective milking cup connection 41 to the milking cup thereof, that is to say, in usage of the device through between the hind legs in the direction of the head of the dairy animal. The milk line 40a, 40c then preferably makes an arc 42, so as thereafter to reach out again, for example here under the mounting 5, toward the corresponding ends of the milk lines 40b, 40d of the rearmost milking cups 17b, d. Thus the respective milking cups are not obstructed by milk lines which lie in the way, in the connection process or otherwise. Moreover, the total width of the mounting with milking cups thus remains as small as possible.

A supplementary teat cup, such as a cleaning cup, pre-milking cup or after-treatment cup, is indicated with 43. This is preferably located in one and the same plane as one of the two pairs of milking cups 17a,b and 17c,d respectively. Thus, the total width of the mounting with milking cups and teat cup remains as small as possible. Said plane is, for example, the plane 23 according to figure 2, or equivalent.

In figure 5b, the part according to figure 5a is represented in a top view, with omission of the camera 20 and the supplementary teat cup 43. It can be seen that the milk line 40a at the height of the milk line connection 41a runs in opposite direction to the milk line 40b at the height of the milk line connection 41b. Furthermore, the milk lines 40a, 40b lie substantially in one plane, compare the plane 23 of figure 2. A same arrangement of the milk hoses 40c, 40d for the second pair of milking cups 17c, 17d ensures that the total width of the mounting 16 with milking cups 17 remains as small as possible.

Figure 6 shows schematically a top view of a further alternative of a part of the milking device. In this case, the robot arm 15 bears at its end (on the left in the figure) a hinge, such as the hinge 33 in figure 4, about which the mounting 16 can rotate. The mounting 16 has side faces 28, which run in parallel and against which the milking cups 17a and 17c are placed, as well as two partial front faces 29a and 29b, which together taper to a point toward the end of the mounting 16 and against which the milking cups 17b and 17d are respectively placed.

During use, the entirety of robot arm 15 and mounting 16 with the milking cups 17 will be moved, for example through between the hind legs of a dairy animal, forward in the direction of the udder. In the connection process, the robot arm will first connect the rearmost milking cups. These are the milking cups 17b and 17d. The rearmost teats often lie closely adjacent to each other. Once the first milking cup, for example 17b, is connected, there is little room for maneuver. It is then favorable if the mounting, which is now partly (approximately) at the height of the connected milking cup 17b, occupies at little space as possible at the site of the connected milking cup 17b, the hind legs and possibly the other rear teat. To this end, the mounting 16 does not run through between the "rearmost" milking cups 17b and 17d, but tapers to a point with two partial front faces 29a and 29b. Note that the mounting could also comprise, in place of two front faces 29a and 29b, a single front face. That front face (or each of those front faces) can also be a curved surface, so that it can even be a matter of a single curved (side) face against which all milking cups 17 are placed.

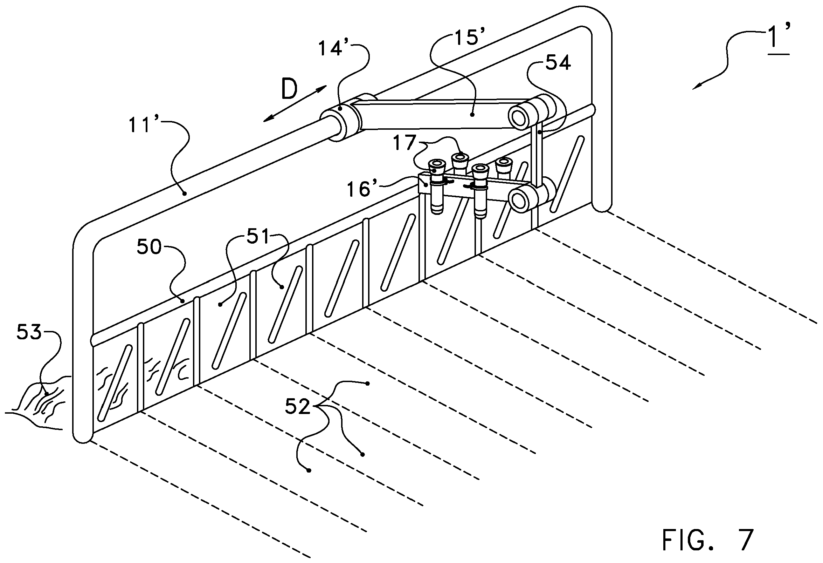

Figure 7 shows in perspective view another embodiment of the milking device according to the invention. This milking device is in general terms indicated with 1' and comprises a feed fence 50 having openings 51 which define milking places 52, as well as a frame 11' over which a trolley 14' bearing a robot arm 5' with a mounting 16' carrying milking cups 17 can move. The robot arm 5' comprises a parallelogram construction 54. Fodder behind the feed fence is indicated with 53.

In this embodiment, there are no milking boxes or other fixed milking places, but these milking places 52 are defined by the openings 51 in the feed fence 50. Via such openings 51, dairy animals can eat fodder 53. When a dairy animal presents at an opening 51, and thus at a milking place 52, a control system (not shown here) can displace the trolley 14' in the direction of the double arrow B in order to bring the robot arm 5' toward the dairy animal. After this, the control system can then bring the robot arm 5' with the parallelogram construction 54, the mounting 16' with the milking cups 17, through between, for example, the hind legs of the dairy animal to the udder, in order to connect up the milking cups 17. This shown embodiment exhibits, of course, a great deal of freedom for the dairy animal which is to be milked. It is possible to fasten to the robot arm 5' fixing means, which serve to limit the freedom of movement of the animal with respect to the feed fence 50. These details are not shown here, however.

## Claims

1. A milking device (1) for milking a dairy animal (2), more particularly a cow, and comprising
- a mounting (16) with four milking cups (17a, 17b, 17c, 17d) detachably fitted thereto,
- a robot arm (15) for displacing the mounting (16) from a rest position in the direction of an udder (3) of the dairy animal (2), and
- a control system for controlling the robot arm (15),
wherein the four milking cups (17a, 17b, 17c, 17d) are each connected with a respective milk line connection (41a, 41b, 41c, 41d) to a respective milk line (40a, 40b, 40c, 40d) for the removal of milk milked with the milking cup (17a, 17b, 17c, 17d), and are each connected with a respective pulsation line connection to a respective pulsation line, **characterized in that**, once the four milking cups (17a, 17b, 17c, 17d) are fitted to the mounting (16), a first pair of the milk line connections (41a, 41b, 41c, 41d) and/or of the pulsation line connections extend substantially parallel to each other in a first direction, and another pair of the milk line connections and/or of the pulsation line connections (41a, 41b, 41c, 41d) extend substantially parallel to each other in a second direction,
which first and second directions are substantially parallel to a vertical plane, and wherein a vertical projection of the first direction onto a horizontal plane and a vertical projection of the second direction onto a horizontal plane, are oppositely directed.

2. The milking device as claimed in claim 1, wherein the first and the second direction are substantially opposed, and in particular are substantially horizontal.

3. The milking device (1) as claimed in claim 1 or 2, wherein the milk lines (17a, 17b, 17c, 17d) and/or the pulsation lines of the first pair extend in an arc (42) and reach out, in the direction of an end facing away from their milk line (17a, 17b, 17c, 17d) and pulsation line connection respectively, substantially parallel with the second pair.

4. The milking device (1) as claimed in claim 3, wherein the arc (42) extends in a substantially vertical plane.

5. The milking device (1) as claimed in one of the preceding claims, comprising a milking place (52), in particular a milking box, for receiving and milking the dairy animal (2) in an intended position, wherein the robot arm (15) is positioned with respect to the milking place (52) and designed to bring the mounting (16) with the milking cups (17a, 17b, 17c, 17d) through between the hind legs (5) of the dairy animal (2) toward the udder (3).

6. The milking device (1) as claimed in claim 5, comprising a plurality of mutually parallel milking places (52), in particular milking boxes, and wherein the robot arm (15) is displaceable along at least two of the plurality of milking places (52), for the purpose of the milking in these at least two milking places (52).

7. The milking device (1) as claimed in one of the preceding claims, comprising a teat recognition device (20), and wherein the control system is programmed and configured to make the robot arm (15), with the aid of the teat recognition device (20), automatically fit the milking cups (17a, 17b, 17c, 17d) onto teats (4) of the dairy animal (2).

8. The milking device (1) as claimed in claim 7, wherein the robot arm (15) and the mounting (16) are couplable, in particular fixedly coupled, via a hinge having a substantially vertical central axis, wherein the control system is configured to make the robot arm (15) rotate the mounting (16) about the central axis.

9. The milking device (1) as claimed in claim 7, wherein the mounting (16) has two parallel side faces (28), as well as one or more front faces (29a, 29b) at an end thereof, and wherein the milking cups (17a, 17b, 17c, 17d) of one of the two pairs of milking cups (17a, 17b, 17c, 17d), if fitted to the mounting (16), are each located on one of the side faces (28), and the milking cups (17a, 17b, 17c, 17d) of the other pair of milking cups (17a, 17b, 17c, 17d) are each located on the front face or on one of the front faces (29a, 29b).

10. The milking device (1) as claimed in claim 8 or 9, wherein the robot arm (15) comprises a telescopic arm, a tracked cable duct, or a parallelogram construction which, in particular, is pivotable about a horizontal axis.

11. The milking device (1) as claimed in one of the preceding claims, wherein at least one supplementary teat cup (43), which extends substantially in said plane, is further fitted, in particular detachably, to the mounting (16).

12. The milking device (1) as claimed in claim 11, wherein the at least one supplementary teat cup (43) comprises a teat cleaning cup, a pre-milking cup or a teat-treating cup.

## Patentansprüche

1. Melkvorrichtung (1) zum Melken eines Milchviehs (2), insbesondere einer Kuh, und umfassend:
- eine Halterung (16) mit vier Melkbechern (17a, 17b, 17c, 17d), die abnehmbar daran angebracht sind,
- einen Roboterarm (15) zum Verschieben der Halterung (16) aus einer Ruheposition in Richtung eines Euters (3) des Milchviehs (2), und
- ein Steuersystem zum Steuern des Roboterarms (15), wobei die vier Melkbecher (17a, 17b, 17c, 17d) jeweils über eine jeweilige Milchleitungsverbindung (41a, 41b, 41c, 41d) mit einer jeweiligen Milchleitung (40a, 40b, 40c, 40d) verbunden sind, um die mit dem Melkbecher (17a, 17b, 17c, 17d) gemolkene Milch zu entfernen, und jeweils über eine jeweilige Pulsleitungsverbindung mit einer jeweiligen Pulsleitung verbunden sind,
**dadurch gekennzeichnet, dass**,
nachdem die vier Melkbecher (17a, 17b, 17c, 17d) an die Halterung (16) angebracht worden sind, ein erstes Paar der Milchleitungsverbindungen (41a, 41b, 41c, 41d) und/oder der Pulsleitungsverbindungen sich im Wesentlichen parallel zueinander in eine erste Richtung erstrecken, und ein anderes Paar der Milchleitungsverbindungen und/oder der Pulsleitungsverbindungen (41a, 41b, 41c, 41d) sich im Wesentlichen parallel zueinander in eine zweite Richtung erstrecken,
wobei die erste und die zweite Richtung im Wesentlichen parallel zu einer vertikalen Ebene sind, und wobei eine vertikale Projektion der ersten Richtung auf eine horizontale Ebene und eine vertikale Projektion der zweiten Richtung auf eine horizontale Ebene in entgegengesetzte Richtungen verlaufen.

2. Melkvorrichtung nach Anspruch 1, wobei die erste und die zweite Richtung im Wesentlichen entgegengesetzt sind und insbesondere im Wesentlichen horizontal sind.

3. Melkvorrichtung (1) nach Anspruch 1 oder 2, wobei die Milchleitungen (17a, 17b, 17c, 17d) und/oder die Pulsleitungen des ersten Paares sich in einem Bogen (42) erstrecken und im Wesentlichen parallel zu dem zweiten Paar in Richtung eines Endes streben, das von ihrer Milchleitungsverbindung (17a, 17b, 17c, 17d) bzw. Pulsleitungsverbindung weg weist.

4. Melkvorrichtung (1) nach Anspruch 3, wobei der Bogen (42) sich in einer im Wesentlichen vertikalen Ebene erstreckt.

5. Melkvorrichtung (1) nach einem der vorhergehenden Ansprüche, umfassend einen Melkplatz (52), insbesondere eine Melkbox, zum Annehmen und Melken des Milchviehs (2) in einer vorgesehenen Position, wobei der Roboterarm (15) in Bezug auf den Melkplatz (52) positioniert wird und konzipiert ist, die Halterung (16) mit den Melkbechern (17a, 17b, 17c, 17d) zwischen den Hinterbeinen (5) des Milchviehs (2) hindurch in Richtung des Euters (3) zu bringen.

6. Melkvorrichtung (1) nach Anspruch 5, umfassend eine Vielzahl zueinander paralleler Melkplätze (52), insbesondere Melkboxen, und wobei der Roboterarm (15) entlang von mindestens zwei von der Vielzahl der Melkplätze (52) verschiebbar ist, um in diesen mindestens zwei Melkplätzen (52) zu melken.

7. Melkvorrichtung (1) nach einem der vorhergehenden Ansprüche, umfassend eine Zitzenerkennungsvorrichtung (20), und wobei das Steuersystem programmiert und konfiguriert ist, um zu bewirken, dass der Roboterarm (15) mithilfe der Zitzenerkennungsvorrichtung (20) die Melkbecher (17a, 17b, 17c, 17d) automatisch an Zitzen (4) des Milchviehs (2) anbringt.

8. Melkvorrichtung (1) nach Anspruch 7, wobei der Roboterarm (15) und die Halterung (16) über ein Scharnier mit einer im Wesentlichen vertikalen Zentralachse koppelbar, insbesondere fest koppelbar sind, wobei das Steuersystem konfiguriert ist, um zu bewirken, dass der Roboterarm (15) die Halterung (16) um die Zentralachse herum rotiert.

9. Melkvorrichtung (1) nach Anspruch 7, wobei die Halterung (16) zwei parallele Seitenflächen (28) sowie eine oder mehrere Frontflächen (29a, 29b) an einem Ende davon aufweist, und wobei die Melkbecher (17a, 17b, 17c, 17d) von einem der beiden Paare von Melkbechern (17a, 17b, 17c, 17d), falls sie an die Halterung (16) angebracht sind, sich jeweils auf einer der Seitenflächen (28) befinden, und die Melkbecher (17a, 17b, 17c, 17d) des anderen Paares von Melkbechern (17a, 17b, 17c, 17d) sich jeweils auf der Frontfläche oder auf einer der Frontflächen (29a, 29b) befinden.

10. Melkvorrichtung (1) nach Anspruch 8 oder 9, wobei der Roboterarm (15) einen Teleskoparm, eine Kabelraupe oder eine Parallelogrammkonstruktion umfasst, der bzw. die insbesondere um eine horizontale Achse schwenkbar ist.

11. Melkvorrichtung (1) nach einem der vorhergehenden Ansprüche, wobei mindestens ein zusätzlicher Zitzenbecher (43), der sich im Wesentlichen in der Ebene erstreckt, zudem, insbesondere abnehmbar, an die Halterung (16) angebracht ist.

12. Melkvorrichtung (1) nach Anspruch 11, wobei der mindestens eine zusätzliche Zitzenbecher (43) einen Zitzenreinigungsbecher, einen Vormelkbecher oder einen Zitzenbehandlungsbecher umfasst.

## Revendications

1. Dispositif de traite (1) pour traire un animal laitier (2), plus particulièrement une vache, et comprenant
- un support (16) avec quatre gobelets de traite (17a, 17b, 17c, 17d) montés de manière amovible à celui-ci,
- un bras de robot (15) pour déplacer le support (16) d'une position de repos en direction d'un pis (3) de l'animal laitier (2), et
- un système de commande pour commander le bras de robot (15),
les quatre gobelets de traite (17a, 17b, 17c, 17d) étant chacun raccordés avec un raccord de ligne à lait respectif (41a, 41b, 41c, 41d) à une ligne à lait respective (40a, 40b, 40c, 40d) pour le retrait du lait trait avec le gobelet de traite (17a, 17b, 17c, 17d), et étant chacun raccordés avec un raccord de ligne de pulsation respectif à une ligne de pulsation respective,
**caractérisé en ce que**,
une fois que les quatre gobelets de traite (17a, 17b, 17c, 17d) sont montés sur le support (16), une première paire des raccords de ligne à lait (41a, 41b, 41c, 41d) et/ou des raccords de ligne de pulsation s'étendent sensiblement parallèlement l'un à l'autre dans une première direction, et une autre paire des raccords de ligne à lait et/ou des raccords de ligne de pulsation (41a, 41b, 41c, 41d) s'étendent sensiblement parallèlement l'un à l'autre dans une deuxième direction,
lesquelles première et deuxième directions sont sensiblement parallèles à un plan vertical, et une projection verticale de la première direction sur un plan horizontal et une projection verticale de la deuxième direction sur un plan horizontal étant dirigées de manière opposée.

2. Dispositif de traite selon la revendication 1, la première et la deuxième direction étant sensiblement opposées, et en particulier étant sensiblement horizontales.

3. Dispositif de traite (1) selon la revendication 1 ou 2, les lignes à lait (17a, 17b, 17c, 17d) et/ou les lignes de pulsation de la première paire s'étendant en arc (42) et s'étendant, dans la direction d'une extrémité opposée respectivement à leur raccord de ligne à lait (17a, 17b, 17c, 17d) et de ligne de pulsation, sensiblement parallèlement à la deuxième paire.

4. Dispositif de traite (1) selon la revendication 3, l'arc (42) s'étendant dans un plan sensiblement vertical.

5. Dispositif de traite (1) selon l'une des revendications précédentes, comprenant un poste de traite (52), en particulier un box de traite, pour recevoir et traire l'animal laitier (2) dans une position prévue, le bras de robot (15) étant positionné par rapport au poste de traite (52) et conçu pour amener le support (16) avec les gobelets de traite (17a, 17b, 17c, 17d) entre les pattes arrière (5) de l'animal laitier (2) vers le pis (3).

6. Dispositif de traite (1) selon la revendication 5, comprenant une pluralité de postes de traite (52) mutuellement parallèles, en particulier des box de traite, et le bras de robot (15) étant déplaçable le long d'au moins deux de la pluralité de postes de traite (52), dans le but de traire dans ces au moins deux postes de traite (52).

7. Dispositif de traite (1) selon l'une des revendications précédentes, comprenant un dispositif de reconnaissance de trayons (20), et le système de commande étant programmé et configuré pour amener le bras de robot (15), à l'aide du dispositif de reconnaissance de trayons (20), à ajuster automatiquement les gobelets de traite (17a, 17b, 17c, 17d) sur les trayons (4) de l'animal laitier (2).

8. Dispositif de traite (1) selon la revendication 7, le bras de robot (15) et le support (16) pouvant être couplés, en particulier de manière fixe, par l'intermédiaire d'une charnière ayant un axe central sensiblement vertical, le système de commande étant configuré pour amener le bras de robot (15) à faire tourner le support (16) autour de l'axe central.

9. Dispositif de traite (1) selon la revendication 7, le support (16) ayant deux faces latérales parallèles (28), ainsi qu'une ou plusieurs faces avant (29a, 29b) à une extrémité de celui-ci, et les gobelets de traite (17a, 17b, 17c, 17d) de l'une des deux paires de gobelets de traite (17a, 17b, 17c, 17d), si ils sont montés sur le support (16), étant chacun situés sur l'une des faces latérales (28), et les gobelets de traite (17a, 17b, 17c, 17d) de l'autre paire de gobelets de traite (17a, 17b, 17c, 17d) étant chacun situés sur la face avant ou sur l'une des faces avant (29a, 29b).

10. Dispositif de traite (1) selon la revendication 8 ou 9, le bras de robot (15) comprenant un bras télescopique, un conduit de câbles guidé ou une construction en parallélogramme qui, en particulier, peut pivoter autour d'un axe horizontal.

11. Dispositif de traite (1) selon l'une des revendications précédentes, au moins un gobelet trayeur supplémentaire (43), qui s'étend sensiblement dans ledit plan, étant en outre monté, en particulier de manière amovible, sur le support (16).

12. Dispositif de traite (1) selon la revendication 11, l'au moins un gobelet trayeur supplémentaire (43) comprenant un gobelet de nettoyage des trayons, un gobelet de prétraite ou un gobelet de traitement des trayons.
